# EUROPÄISCHE PATENTANMELDUNG

(11) **EP 4 699 433 A1**
(43) Veröffentlichungstag der Anmeldung: **25.02.2026**
(21) Anmeldenummer: 25187281.8
(22) Anmeldetag: 03.07.2025
(51) Int. Cl.: A01D 43/10

(54) **SELBSTFAHRENDER FELDHÄCKSLER**

(30) Priorität: 22.08.2024 DE 102024123971
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig, Ingo, 33330 Gütersloh (DE); Brune, Markus, 33428 Harsewinkel (DE); Dirksen, Matthis, 48231 Warendorf (DE); Titkemeier, Daniel, 49080 Osnabrück (DE); Löffler, Niklas, 88367 Hohentengen (DE); Lamp, Marco, 88348 Bad Saulgau (DE)
(74) Vertreter: CLAAS Gruppe

(57) **Zusammenfassung**

Die vorliegende Erfindung betrifft einen selbstfahrenden Feldhäcksler (1) mit einer Konditioniereinrichtung (6), welche eine erste Walze (8) und eine zweite Walze (9) umfasst, wobei eine Walze der beiden Walzen (8, 9) derart beweglich gelagert ist, dass sich der Abstand zwischen den Walzen (8, 9) zur Einstellung einer Spaltbreite der Konditioniereinrichtung (6) verändern lässt. Die Konditioniereinrichtung (6) umfasst weiterhin eine Verstellvorrichtung (22) zur Einstellung der Spaltbreite, wobei die Verstellvorrichtung (22) einen ersten Hydraulikzylinder (23) und einen zweiten Hydraulikzylinder (24) umfasst. Der selbstfahrende Feldhäcksler (1) ist dadurch gekennzeichnet, dass die Verstellvorrichtung (22) eine ansteuerbare Ventilbaugruppe (26) umfasst, welche dazu vorgesehen und eingerichtet ist, die beiden Hydraulikzylinder (23, 24) unabhängig voneinander mit von einer Hydraulikquelle (27) bereitgestelltem Hydraulikmedium zu beaufschlagen.

## Beschreibung

Die vorliegende Anmeldung betrifft einen selbstfahrenden Feldhäcksler mit einer in dessen Erntegutkanal angeordneten Konditioniereinrichtung gemäß dem Oberbegriff des unabhängigen Patentanspruchs 1.

Konditioniereinrichtungen werden in der landwirtschaftlichen Erntetechnik bei selbstfahrenden Feldhäckslern verwendet, um im aufgenommenen Erntegut enthaltene Körner zum Zweck der besseren Verdaubarkeit bei der anschließenden Verfütterung an Tiere aufzuschließen.

Solche Konditioniereinrichtungen sind im Feldhäcksler einem Häckselaggregat in Bezug auf die Erntgutstromrichtung nachgelagert angeordnet. In die Konditioniereinrichtung tritt demnach bereits gehäckseltes Erntegut ein, um nach dortiger Bearbeitung unterstützt von einem nachgelagerten Auswurfbeschleuniger durch eine Überladeeinrichtung in einen Ladebehälter ausgeworfen zu werden.

Zur Erfüllung der genannten Funktion des Aufschließens im Erntegut enthaltener Körner umfassen gängige Konditioniereinrichtungen zwei mit einer zur Erntegutbearbeitung geeigneten Profilierung versehene Walzen. Diese sind jeweils gegenüber einem Gehäuse der Konditioniereinrichtung um deren Längsachse drehbar gelagert und werden - beispielsweise durch einen an der Erntemaschine vorhandenen Riementrieb - angetrieben. Aufgrund deren paralleler und definiert beabstandeter einstellbarer Anordnung begrenzen die Walzen einen Spalt, den das zu bearbeitende Erntegut in Erntegutstromrichtung durchläuft und dabei zwischen den profilierten Walzen bearbeitet wird. Zweckmäßigerweise drehen die Walzen dazu gegenläufig, werden jedoch zur Erhöhung der Reibwirkung zwischen den Walzen bevorzugt mit geringfügig unterschiedlich hoher Drehzahl angetrieben.

Zum Verstellen des Spaltes offenbart die DE 198 44 894 A1 eine Verstelleinrichtung mit Zylindern, die mittels einer manuell oder aktuatorisch verstellbaren Mehrkammerpumpe betätigbar sind. Die Mehrkammerpumpe ist dabei so ausgelegt, dass den Zylindern je nach Art der Verstellung die gleiche Menge des Fluids zugeführt wird, oder dass die gleiche Menge von den Zylindern in die Mehrkammerpumpe einströmen kann. Hierdurch werden die Zylinder stets um den gleichen Betrag verfahren.

Nachteilig bei einer solchen über eine Mehrkammerpumpe realisierten Verstellung der Spaltbreite ist, dass die Einstellung des Spalts bzw. der Spaltbreite der Konditioniereinrichtung nur mit einer sehr geringen Verstellgeschwindigkeit erfolgen kann. Obwohl der Bestand an Erntegut im Feld regelmäßig schwankt, was eine regelmäßige Einstellung bzw. Anpassung der Spaltbreite erforderlich macht, wird das Feld aufgrund dieser Verstellträgheit oftmals lediglich mit einer initial-eingestellten Spaltbreite der Konditioniereinrichtung vom Feldhäcksler abgeerntet. Dieser Umstand steht einem automatisierten und effizienten Ernteprozess entgegen. Sofern an der Mehrkammerpumpe Verschleißerscheinungen auftreten, kann dies weiterhin dazu führen, dass sich die Walzen schief stellen können. Dies ist für den Bediener nicht zu erkennen, führt allerdings zu Qualitätsverlusten des Ernteguts.

Ausgehend von dem vorstehend genannten Stand der Technik ist es demnach die Aufgabe der vorliegenden Erfindung, die beschriebenen Nachteile des Standes der Technik auszuräumen und insbesondere eine schnellere und präzisere Einstellung der Spaltbreite einer Konditioniereinrichtung zu realisieren.

Diese Aufgabe wird erfindungsgemäß durch die Merkmale des unabhängigen Patentanspruchs 1 gelöst, wobei vorteilhafte Weiterbildungen des erfindungsgemäßen selbstfahrenden Feldhäckslers Gegenstand der entsprechenden abhängigen Patentansprüche 2 bis 13 sind.

Demnach betrifft die vorliegende Erfindung einen selbstfahrender Feldhäcksler mit einer in dessen Erntegutkanal angeordneten Konditioniereinrichtung. Die Konditioniereinrichtung umfasst eine erste Walze und eine zweite Walze, welche jeweils um deren Längsachse drehbar gelagert sind. Eine Walze der beiden Walzen ist ferner derart beweglich gelagert, dass sich der Abstand zwischen den Walzen zur Einstellung einer Spaltbreite der Konditioniereinrichtung verändern lässt. Die Konditioniereinrichtung umfasst eine Verstellvorrichtung zur Einstellung der Spaltbreite, wobei die Verstellvorrichtung einen ersten Hydraulikzylinder und einen zweiten Hydraulikzylinder umfasst, welche mit der zur Einstellung der Spaltbreite beweglich gelagerten Walze an in Richtung der Längsachse der Walze gegenüberliegenden Seiten gekoppelt sind. Der selbstfahrende Feldhäcksler ist dadurch gekennzeichnet, dass die Verstellvorrichtung eine ansteuerbare Ventilbaugruppe umfasst, welche dazu vorgesehen und eingerichtet ist, die beiden Hydraulikzylinder unabhängig voneinander mit von einer Hydraulikquelle bereitgestelltem Hydraulikmedium zu beaufschlagen.

Durch die Verwendung einer Ventilbaugruppe als Bestandteil der Verstellvorrichtung, welche eine Hydraulikquelle (Hydraulikpumpe und Tank) mit den Hydraulikzylindern der Verstellvorrichtung hydraulisch verbindet, wird es möglich die Spaltbreite der Konditioniereinrichtung im Betrieb des Feldhäckslers deutlich schneller zu verstellen als bisher mittels der aus dem Stand der Technik bekannten Mehrkammerpumpe. Insbesondere lassen sich durch die Ventilbaugruppe derartig hohe Verstellgeschwindigkeiten erreichen, die eine Reaktion auf Bestandsänderungen im Feld während der Ernte möglich machen, was besonders vorteilhaft für einen automatisierten Betrieb des Feldhäckslers ist und die Qualität des mittels des Feldhäckslers verarbeiteten Ernteguts sowie die Effizienz des Ernteprozesses insgesamt erheblich steigert.

Die erfindungsgemäße Ventilbaugruppe ermöglicht weiterhin jede Seite der zur Einstellung der Spaltbreite beweglich gelagerten Walze unabhängig zu verstellen. Dies erlaubt, Schiefstellungen der zur Einstellung der Spaltbreite beweglich gelagerten Walze zu korrigieren, indem die Walze auf jeder Seite unterschiedlich angesteuert bzw. bewegt wird. Hierdurch kann stets sichergestellt werden, dass die beiden Walzen der Konditioniereinrichtung über ihre gesamte Länge entlang ihrer Längsachse parallel zueinander ausgerichtet sind, was wesentlich für ein homogenes Aufschließen des Ernteguts ist.

Zusätzlich erlaubt die Verwendung der Ventilbaugruppe eine erheblich leichtere Wartung der Verstellvorrichtung, beispielsweise ein deutlich einfacheres Befüllen und Entlüften der Verstellvorrichtung oder einen schnelleren Austausch von verschlissenen Komponenten, was die Fehlerwahrscheinlichkeit deutlich reduziert und Kostenvorteile schafft.

Gemäß einer vorteilhaften Weiterbildung der Erfindung ist vorgesehen, dass die Hydraulikquelle Teil einer Arbeitshydraulik des selbstfahrenden Feldhäckslers ist.

Die Arbeitshydraulik des selbstfahrenden Feldhäckslers ist ein hydraulisches Hochdrucksystem. Dies begünstigt erheblich die schnellen Verstellgeschwindigkeiten bei der Einstellung der Spaltbreite der Konditioniereinrichtung. Die Arbeitshydraulik dient der Versorgung verschiedenster Arbeitsaggregate des Feldhäckslers und der Realisierung von verschiedensten Funktionen im Betrieb des Feldhäckslers. Die Arbeitshydraulik ist somit ein unverzichtbarer Bestandteil des Feldhäckslers und stets vorhanden. Die Nutzung der Arbeitshydraulik zur Versorgung der Ventilbaugruppe sorgt somit dafür, dass die erfindungsgemäße Verstellvorrichtung, deren Bestandteil die Ventilbaugruppe ist, besonders unkompliziert in den Feldhäcksler integriert werden kann, ohne die Komplexität der Architektur des Feldhäckslers nachteilig zu beeinflussen.

Gemäß einer vorteilhaften Weiterbildung der Erfindung ist vorgesehen, dass die Ventilbaugruppe zwei Ventileinrichtungen umfasst, wobei jeweils eine Ventileinrichtung jeweils einen der beiden Hydraulikzylinder mit der Hydraulikquelle hydraulisch verbindet.

Gemäß einer vorteilhaften Weiterbildung der Erfindung ist vorgesehen, dass jede der beiden Ventileinrichtungen zwei in Reihe geschaltete Wegeventile mit jeweils zwei Schaltstellungen, eine Schaltstellung zum Zuführen von Hydraulikmedium in den jeweiligen Hydraulikzylinder und eine Schaltstellung zum Ablassen von Hydraulikmedium aus dem jeweiligen Hydraulikzylinder, umfasst.

Vorzugsweise ist vorgesehen, dass die zwei in Reihe geschalteten Wegeventile elektrisch ansteuerbar sind.

Vorzugsweise ist vorgesehen, dass die beiden Hydraulikzylinder jeweils als einfachwirkende Zylinder ausgestaltet sind.

Die Nutzung von zwei Ventilbaugruppen mit jeweils zwei Wegeventilen stellt eine besonders einfache Möglichkeit dar die Hydraulikzylinder der Verstellvorrichtung unabhängig voneinander zwecks Einstellung der Spaltbreite der Konditioniereinrichtung anzusteuern bzw. zu beaufschlagen. Ferner stellen die Wegeventile, die jeweils zwei Schaltstellung zum Zuführen und Abführen von Hydraulikmedium in und aus den Hydraulikzylinders umfassen, Standardkomponenten dar, was einen kostengünstigen Aufbau der Ventilbaugruppe mit nur geringer Komplexität zulässt.

Gemäß einer vorteilhaften Weiterbildung der Erfindung ist vorgesehen, dass ein Wegeventil der beiden Wegeventile in der Schaltstellung zum Zuführen von Hydraulikmedium in den jeweiligen Hydraulikzylinder eine Rückflusssicherung umfasst.

Die Integration einer Rückflusssicherung erlaubt es den jeweiligen Hydraulikzylinder in der eingestellten Position zu halten, wenn die Hydraulikquelle die Ventilgruppe nicht mit Hydraulikmedium beaufschlagt und schafft gleichzeitig einen Sicherheitsmechanismus, der bei einem unerwarteten Ausfall einer hydraulischen Komponente, beispielsweise eines Wegeventils oder der Hydraulikquelle, im Betrieb nicht zu unvorhersehbaren Reaktionen der Konditioniereinrichtung führt.

Gemäß einer vorteilhaften Weiterbildung der Erfindung ist vorgesehen, dass die Ventilbaugruppe ein den beiden Ventileinrichtungen vorgeschaltetes, einstellbares Druckbegrenzungsventil umfasst.

Auch das Druckbegrenzungsventil schafft einen Sicherheitsmechanismus, der bei unvorhersehbaren Ereignissen im Betrieb greift und dafür sorgt, dass die Komponenten der Konditioniereinrichtung im Betrieb keine Beschädigungen erfahren. Beispielsweise ist es vorstellbar, dass sich zwischen den Walzen der Konditioniereinrichtung ein Fremdkörper verkeilt hat. Dieser Fremdkörper ist oder wird weder vom Bediener noch vom System selbst zu erkennen bzw. erkannt. Wird nun die Spaltbreite verringert, könnte dies nicht nur zur Beschädigung der Walzen, beispielsweise deren Oberflächen, sondern aufgrund des übermäßig hohen hydraulischen Drucks, der im Kreislauf wirkt, da sich die Spaltbreite aufgrund des Fremdkörpers nicht ohne Widerstand verändern lässt, auch zur Beschädigung der Komponenten der Ventilbaugruppe führen. Das Druckbegrenzungsventil schafft hier Abhilfe und öffnet in einem solchen Fall, wodurch die Hydraulikquelle, also Hydraulikpumpe und Tank, kurzgeschlossen wird.

Gemäß einer vorteilhaften Weiterbildung der Erfindung ist vorgesehen, dass die Konditioniereinrichtung ein Gehäuse mit einem ersten Gehäuseabschnitt und einem zweiten Gehäuseabschnitt umfasst, wobei die Walzen jeweils mittels einer zwischen den Gehäuseabschnitten verlaufenden Welle an dem ersten Gehäuseabschnitt gelagert sind, wobei zur Lagerung der zur Einstellung der Spaltbreite beweglich gelagerten Walze Drehlager dienen, welche mittels einer Linearführung an dem ersten Gehäuseabschnitt verschiebbar gelagert sind.

Vorzugsweise ist vorgesehen, dass die beiden Hydraulikzylinder jeweils mit der Linearführung gekoppelt und dazu vorgesehen und eingerichtet sind, die Walze gegen Vorspannung eines Federelements zur Einstellung der Spaltbreite zu bewegen.

Eine derartige Anordnung, zunächst der Verlauf der Wellen zwischen den Gehäuseabschnitten, gewährleistet, dass die Walzen bei geöffnetem Gehäuse auf einfache Weise zugänglich sind, da die zueinander geöffneten Gehäuseabschnitte zwangsläufig die Walzen, deren Wellen und Lagerstellen freigeben. Eine bequeme Demontage bzw. Montage in radialer Richtung zur Walzenlängsachse ist damit möglich. Die weiterhin vorgesehene Lagerung beider Wellen an dem ersten - ortsfesten - Gehäuseabschnitt bedingt, dass an dem zweiten Gehäuseabschnitt keine Walze gelagert ist. Die Funktion des zweiten Gehäuseabschnitts ist damit im Wesentlichen auf die eines Deckels reduziert, der zur Abdichtung des Gehäuses im Erntebetrieb dient sowie zur Versteifung des Gehäuses beiträgt. Daraus ergibt sich die vorteilhafte Wirkung, dass der zweite Gehäuseabschnitt gewichtsmäßig deutlich entlastet ist und sich somit erheblich einfacher und sicherer öffnen lässt. Der zweite Gehäuseabschnitt kann dabei grundsätzlich auf unterschiedliche Weise gegenüber dem ersten Gehäuseabschnitt bewegbar sein. In vorteilhafter Weiterbildung der Erfindung sind die Gehäuseabschnitte um eine parallel zu den Wellen verlaufende Achse schwenkbar miteinander verbunden.

Durch Verwendung einer Linearführung kann die zur Einstellung der Spaltbreite beweglich gelagerte Walze auch bei hohen wirkenden Kräften sicher und präzise in eine gewünschte Abstandsposition geführt werden, wobei die Bewegung gegen die Vorspannung eines Federelements für eine präzise, ruckfreie Verstellbarkeit und somit Einstellung der Spaltbreite sorgt.

Gemäß einer vorteilhaften Weiterbildung der Erfindung ist vorgesehen, dass die Ventilbaugruppe am zweiten Gehäuseabschnitt angeordnet ist.

Die Anordnung der Ventilbaugruppe am zweiten Gehäuseabschnitt sorgt für eine gute Zugänglichkeit zur Ventilbaugruppe. Dies ist insbesondere für Montage- und Wartungszwecke von Vorteil, sorgt allerdings auch dafür, dass sich die Ventilbaugruppe besonders einfach von Verunreinigungen, die im Betrieb des Feldhäckslers auftreten, beispielsweise Staub oder Erntegutrückstände, befreien lässt.

Gemäß einer vorteilhaften Weiterbildung der Erfindung ist vorgesehen, dass die Verstellvorrichtung eine Erfassungseinrichtung zur Bestimmung von Ist-Spaltbreiten der Konditioniereinrichtung mit einer ersten Wegmessvorrichtung und einer zweiten Wegmessvorrichtung umfasst, wobei die beiden Wegmessvorrichtungen mit der zur Einstellung der Spaltbreite beweglich gelagerten Walze auf in Richtung der Längsachse der Walze gegenüberliegenden Seiten gekoppelt sind.

Gemäß einer vorteilhaften Weiterbildung der Erfindung ist vorgesehen, dass jede der beiden Wegmessvorrichtungen ein Drehpotentiometer und ein Koppelgestänge umfasst, wobei das Koppelgestänge einerseits mit der zur Einstellung der Spaltbreite beweglich gelagerten Walze und andererseits mit dem Drehpotentiometer verbunden ist.

Insbesondere ist vorgesehen, dass das Koppelgestänge einerseits mit der Linearführung und andererseits mit dem Drehpotentiometer verbunden ist.

Durch die erfindungsgemäße Erfassungseinrichtung wird es möglich auf jeder Seite eine Absolutwegmessung durchzuführen und somit die Absolutposition der zur Einstellung der Spaltbreite beweglich gelagerten Walze zu bestimmen, wodurch es möglich wird, etwaige Schiefstellungen der zur Einstellung der Spaltbreite beweglich gelagerten Walze und somit eine Ungleichförmigkeit des Spalts der Konditioniereinrichtung zu detektieren.

Gemäß einer vorteilhaften Weiterbildung der Erfindung ist vorgesehen, dass der selbstfahrende Feldhäcksler eine Steuereinrichtung zur Steuerung und/oder Regelung der Ventilbaugruppe umfasst, wobei die Steuereinrichtung dazu vorgesehen und eingerichtet ist, die Ventilbaugruppe derart anzusteuern und/oder zu regeln, dass mittels der beiden Hydraulikzylinder eine vorgebbare Soll-Spaltbreite der Konditioniereinrichtung eingestellt wird.

Gemäß einer vorteilhaften Weiterbildung der Erfindung ist vorgesehen, dass die Steuereinrichtung dazu vorgesehen und eingerichtet ist, die mittels der Erfassungseinrichtung bestimmten Ist-Spaltbreiten zu empfangen, die empfangenen Ist-Spaltbreiten mit einer vorgegebenen Soll-Spaltbreite zu vergleichen und abhängig von dem Vergleich die Ventilbaugruppe anzusteuern und/oder zu regeln.

Die Verwendung einer Steuereinrichtung, mittels welcher die Ventilbaugruppe angesteuert wird, erlaubt eine besonders schnelle und gleichzeitig hochpräzise Einstellung der Spaltbreite durch unabhängige Verstellung der Hydraulikzylinder auf jeder Seite der zur Einstellung der Spaltbreite beweglich gelagerten Walze. Die Möglichkeit erfasste Ist-Spaltbreiten und vorgegebene Soll-Spaltbreiten zu verarbeiten und etwaige Differenzen hierdurch zu bestimmen, erlaubt es den Spalt auf jeder Seite auf eine spezifische Absolutposition einzuregeln und somit stets die für eine hohe Qualität und Effizienz des Ernteguts bzw. Ernteprozesses erforderliche Parallelität des Spalts sicherzustellen.

Die vorliegende Erfindung wird nachstehend anhand der in den Figuren abgebildeten Ausführungsformen näher beschrieben.

Es zeigen:
- FIG. 1:: eine schematische Seitenansicht eines erfindungsgemäßen selbstfahrenden Feldhäckslers;
- Fig. 2: eine schematische und exemplarische Ansicht einer erfindungsgemäßen Konditioniereinrichtung des erfindungsgemäßen selbstfahrenden Feldhäckslers;
- FIG. 3: ein schematischer und exemplarischer Hydraulikschaltplan umfassend eine erfindungsgemäße Ventilbaugruppe; und
- FIG. 4:: eine schematische und exemplarische Ansicht einer erfindungsgemäßen Erfassungseinrichtung zur Bestimmung von Ist-Spaltbreiten der erfindungsgemäßen Konditioniereinrichtung.

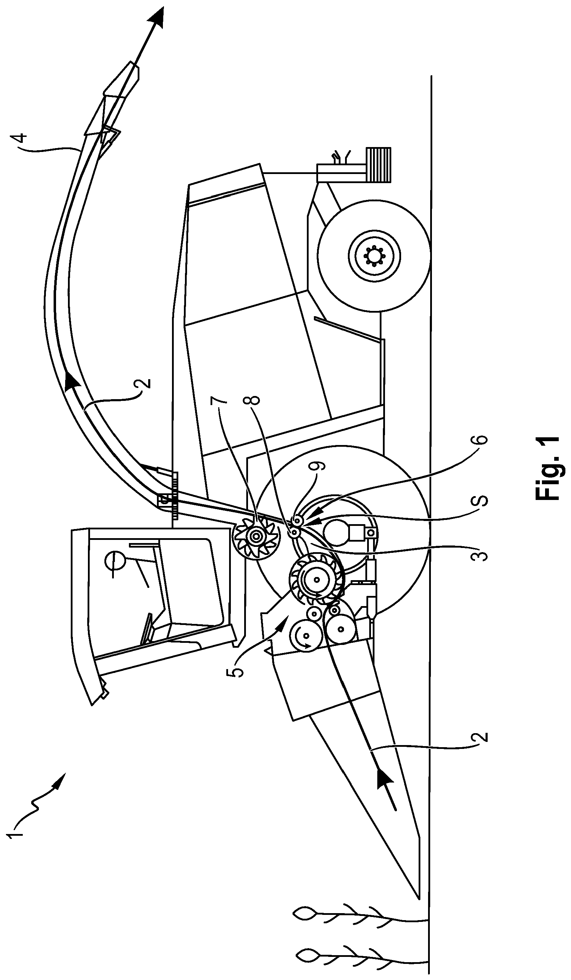

FIG. 1 zeigt in schematischer Seitenansicht einen selbstfahrenden Feldhäcksler 1 bei der Ernte auf einer landwirtschaftlichen Fläche bzw. Feld. Der Feldhäcksler 1 erntet Pflanzen von der landwirtschaftlichen Fläche, um das erhaltene Erntegut 2 in Form eines Erntegutstroms - in FIG. 1 als mit Pfeilen versehene Linie angedeutet - durch die im Erntegutkanal 3 des Feldhäckslers 1 angeordneten Bearbeitungs- und Förderorgane zu führen und mittels einer Überladeeinrichtung 4 in einen - nicht dargestellten - Ladebehälter abzuwerfen. Die Bearbeitungs- und Förderorgane des Feldhäckslers 1 umfassen unter anderem ein Häckselaggregat 5, das mittels einer rotierenden, mit Messern ausgestatteten Häckseltrommel das Erntegut 2 in Zusammenwirkung mit einer Gegenschneide zerkleinert, eine dem Häckselaggregat 5 im Erntegutkanal 3 in Gutstromrichtung nachgelagerte Konditioniereinrichtung 6, die nachfolgend im Detail beschrieben wird, sowie einen der Konditioniereinrichtung 6 im Erntegutkanal 3 in Gutstromrichtung nachgelagerten Auswurfbeschleuniger 7, welcher das Erntegut 2 mittels rotierender Wurfpaddel für den sicheren Auswurf durch die Überladeeinrichtung beschleunigt.

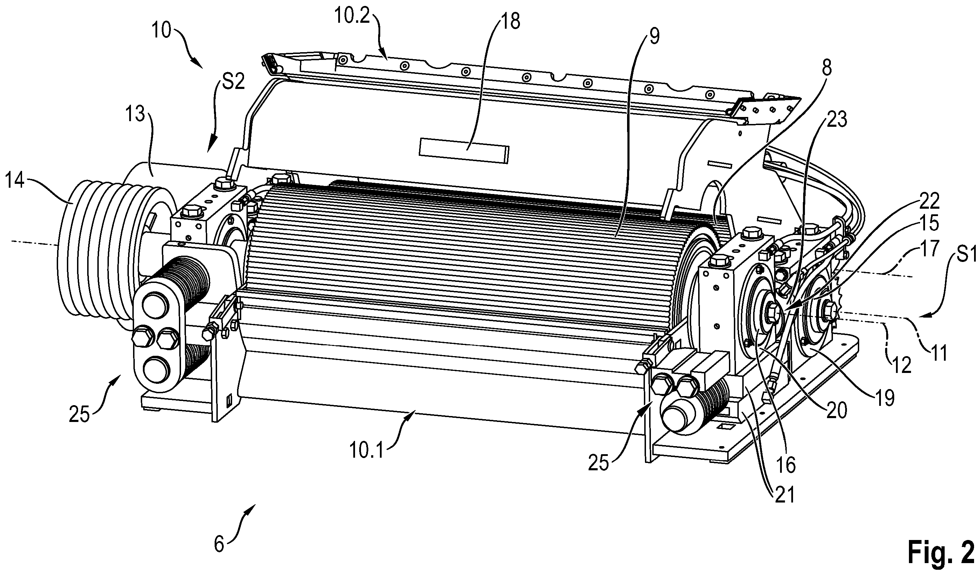

FIG. 2 zeigt eine erfindungsgemäße Konditioniereinrichtung 6 in perspektivische Ansicht. Die Konditioniereinrichtung 6 umfasst im Wesentlichen ein Walzenpaar, bestehend aus einer ersten Walze 8 und einer zweiten Walze 9, die jeweils gegenüber einem Gehäuse 10 um deren Längsachse 11 bzw. 12 drehbar gelagert sind. Zum Antrieb der Walzen 8, 9 dienen zwei Riemenrollen 13, 14. Die Riemenrolle 13 steht über eine Welle 15 mit der ersten Walze 8, die Riemenrolle 14 über eine Welle 16 mit der zweiten Walze 9 in Antriebsverbindung.

Die Walzen 8, 9 sind parallel zueinander und derart beabstandet voneinander angeordnet, dass diese einen im Betrieb der Konditioniereinrichtung 6 von Erntegut 2 durchlaufenen Spalt S begrenzen. Zur Förderung des Ernteguts 2 in eine Gutstromrichtung sind die Walzen 8, 9 gegenläufig angetrieben, wobei aufgrund der profilierten Oberflächen der Walzen 8, 9 sowie eines geringfügigen Drehzahlunterschieds der Wellen 15, 16 das Erntegut 2 zwischen den Walzen 8, 9 bearbeitet (gerieben, gequetscht, zerfasert) wird, um darin enthaltene Körner aufzuschließen.

Das Gehäuse 10 ist zweigeteilt und umfasst einen ersten Gehäuseabschnitt 10.1, mit dem ein zweiter Gehäuseabschnitt 10.2 um eine parallel zu den Wellen 15, 16 verlaufende Achse 17 schwenkbar verbunden ist. Der zweite (obere) Gehäuseabschnitt 10.2 bildet so einen Deckel für den als Tragrahmen für Funktionselemente der Konditioniereinrichtung 6 dienenden ersten Gehäuseabschnitt 10.1. In FIG. 2 befindet sich der zweite Gehäuseabschnitt 10.2 gegenüber dem ersten Gehäuseabschnitt 10.1 in einer angehobenen Stellung, das Gehäuse 10 ist geöffnet, wodurch die Walzen 8, 9 sowie sonstige Funktionselemente von außerhalb des Gehäuses 10 beispielsweise zu Wartungs- und Reparaturzwecken zugänglich sind.

Durch Absenken des zweiten Gehäuseabschnitts 10.2 lässt sich das Gehäuse 10 in eine geschlossene Stellung bringen, in der das Gehäuse 10 die Walzen 8, 9 gegenüber der Umgebung abschließt. Die geschlossene Gehäusestellung wird zum einsatzgemäßen Betrieb der Konditioniereinrichtung 6 bei der Ernte gewählt, um zu verhindern, dass bei der Erntegutbearbeitung entstehende Säfte oder sonstige Erntegutbestandteile aus dem Arbeitsbereich der Walzen 8, 9 nach außerhalb des Gehäuses 10 gelangen und dort weitere Funktionselemente oder beispielsweise den Wartungsraum des Feldhäckslers 1 verschmutzen. Zum manuellen Öffnen und Schließen des Gehäuses 10 ist am zweiten Gehäuseabschnitt 10.2 ein Handgriff 18 angebracht, der - bei eingebauter Konditioniereinrichtung 6 in den Feldhäcksler 1 - von einem hinter der Konditioniereinrichtung 6 befindlichen Wartungsraum leicht zugänglich ist.

Wie in FIG. 2 dargestellt, sind die Walzen 8 und 9 jeweils auf der ersten Welle 15 bzw. der zweiten Welle 16 montiert. Die Wellen 15, 16 ragen jeweils beidseitig aus dem Gehäuse 10 und sind in außerhalb des Gehäuses 10 angeordneten baugleichen ersten Drehlagern 19 bzw. zweiten Drehlagern 20 gelagert. Die der ersten Welle 15 zugeordneten Drehlager 19 sind dabei direkt am ersten Gehäuseabschnitt 10.1 befestigt und somit ortsfest am ersten Gehäuseabschnitt 10.1 angeordnet. Im Unterschied dazu sind die der zweiten Welle 16 zugeordneten Drehlager 20 mittels einer Linearführung 21 gegenüber dem ersten Gehäuseabschnitt 10.1 gelagert. Die Linearführung 21 ist als T-Schlittenführung bzw. Schwalbenschwanzschlittenführung ausgeführt und ermöglicht damit ein Verschieben der zweiten Welle 16 quer zu deren Längsachse 12, wodurch sich der Abstand zwischen den Walzen 8, 9 und damit die für die Erntegutbearbeitung relevante Spaltbreite einstellen bzw. verändern lässt. Eine der beiden Walzen 8, 9, in der dargestellten Ausführungsform die zweite Walze 9, ist somit neben der drehbeweglichen Lagerung ferner derart beweglich gelagert, dass sich der Abstand zwischen den Walzen 8, 9 zur Einstellung der Spaltbreite der Konditioniereinrichtung 6 verändern lässt.

Zur Abstandsänderung zwischen den Walzen 8, 9 bzw. zur Einstellung der Spaltbreite umfasst die Konditioniereinrichtung 6 eine Verstellvorrichtung 22. Die Verstellvorrichtung 22 umfasst einen ersten Hydraulikzylinder 23 und einen zweiten Hydraulikzylinder 24, wobei in FIG. 2 lediglich der erste Hydraulikzylinder 23 zu erkennen ist. Der erste Hydraulikzylinder 23 und der zweite Hydraulikzylinder 24 sind mit der zur Einstellung der Spaltbreite beweglich gelagerten Walze 8,9, hier der zweiten Walze 9, an in Richtung der Längsachse 11, 12 dieser Walze 8, 9, hier der Längsachse 12 der zweiten Walze 9, gegenüberliegenden Seiten, erste Seite S1 und zweite Seite S2, gekoppelt.

Insbesondere sind die beiden Hydraulikzylinder 23, 24 zwischen dem ortsfest angeordneten Drehlager 19 und dem verschiebbaren Drehlager 20 auf jeder Seite S1, S2 angeordnet und somit mit der Linearführung 21 gekoppelt. Zur präzisen und ruckfreien Positionsverstellung der Lager 20 und somit zur Einstellung der Spaltbreite wirken die beiden Hydraulikzylinder 23, 24 jeweils gegen die Vorspannkraft eines Federelements 25, welches vorzugsweise als Tellerfederanordnung ausgeführt ist.

Im Gegensatz zum eingangs angeführten Stand der Technik, welcher eine Ansteuerung der Hydraulikzylinder über eine Mehrkammerpumpe vorsieht, umfasst die erfindungsgemäße Konditioniereinrichtung 6 bzw. die Verstellvorrichtung 22 eine Ventilbaugruppe 26, welche vorzugsweise am zweiten Gehäuseabschnitt 10.2 des Gehäuses 10 der Konditioniereinrichtung 6 angeordnet ist. Die Ventilbaugruppe 26 ist ansteuerbar und dazu vorgesehen und eingerichtet, die beiden Hydraulikzylinder 23, 24 unabhängig voneinander mit von einer Hydraulikquelle 27 bereitgestelltem Hydraulikmedium zu beaufschlagen, um eine Änderung des Abstands zwischen den Walzen 8, 9 zur Einstellung der Spaltbreite der Konditioniereinrichtung 6 zu bewirken. Die unabhängige Beaufschlagung der beiden Hydraulikzylinder 23, 24 erlaubt eine auf jeder der beiden gegenüberliegenden Seiten S1, S2 unabhängige Verlagerung der beweglich gelagerten Walze 8, 9, hier der zweiten Walze 9, sodass etwaige Schiefstellungen dieser Walze 8, 9, hier der Walze 9, anders als bei einer Verwendung einer Mehrkammerpumpe, welche lediglich eine Verstellung um den gleichen Betrag erlaubt, kompensiert werden können.

Die Hydraulikquelle 27 ist Teil einer Arbeitshydraulik des Feldhäckslers 1, welche der Versorgung von verschiedensten Aggregaten des Feldhäckslers 1, beispielsweise der verschiedenen Bearbeitungs- und Förderorgane des Feldhäckslers 1, sowie zur Realisierung verschiedener Betriebsfunktionen des Feldhäckslers 1 dient. Die Hydraulikquelle 27 wird von einer Hydraulikpumpe P sowie einem Tank T gebildet.

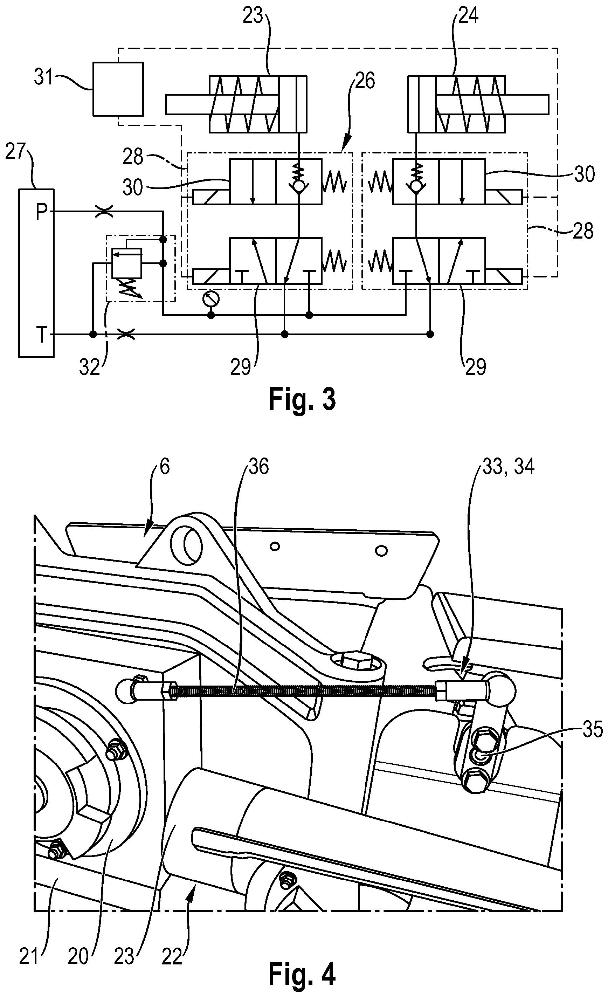

Die Ventilbaugruppe 26, deren Aufbau insbesondere dem Hydraulikschaltplan in FIG. 3 zu entnehmen ist, umfasst zwei Ventileinrichtungen 28. Jede Ventileinrichtung 28 verbindet einen der beiden Hydraulikzylinder 23, 24 hydraulisch mit der von der Arbeitshydraulik des Feldhäckslers 1 bereitgestellten Hydraulikquelle 27, also mit der Hydraulikpumpe P sowie dem Tank T. Über die beiden Ventileinrichtungen 28 wird somit die unabhängige Beaufschlagung der beiden Hydraulikzylinder 23, 24 zur Einstellung der Spaltbreite der Konditioniereinrichtung 6 realisiert. Die Hydraulikzylinder 23, 24 sind dabei jeweils als einfachwirkende Hydraulikzylinder ausgeführt, wobei Hydraulikmedium über die Ventileinrichtungen 28 jeweils bedarfsweise, je nach einzustellender Spaltbreite der Konditioniereinrichtung 6, einer Kammer im entsprechenden Hydraulikzylinder 23, 24 zugeführt oder hieraus abgelassen werden kann.

Jede der beiden Ventileinrichtungen 28 umfasst hierfür zwei in Reihe geschaltete Wegeventile 29, 30. Die Wegeventile 29, 30 umfassen jeweils zwei Schaltstellungen, wobei eine Schaltstellung zur Zuführung von Hydraulikmedium in den entsprechenden Hydraulikzylinder 23, 24 bzw. die Kammer und die andere Schaltstellung zum Ablassen von Hydraulikmedium aus dem entsprechenden Hydraulikzylinder 23, 24 bzw. der Kammer dient. Die Wegeventile 29, 30 sind elektrisch ansteuerbar bzw. betätigbar, sodass über ein von einer Steuereinrichtung 31 bereitgestelltes Signal zwischen den beiden Schaltstellungen geschaltet werden kann, wobei die Wegeventile 29, 30 jeweils gegen eine Feder vorgespannt sind. Das dem jeweiligen Hydraulikzylinder 23, 24 unmittelbar vorgeschaltete Wegeventil 30 ist dabei ein 2/2-Wegeventil und umfasst in der Schaltstellung zum Zuführen von Hydraulikmedium in den entsprechenden Hydraulikzylinder 23, 24 eine Rückflusssicherung. Das andere Wegeventil 29 ist als 3/2-Wegeventil ausgeführt. Die Ventilbaugruppe 26 umfasst neben den beiden Ventileinrichtungen 28 noch ein einstellbares Druckbegrenzungsventil 32, welches zwischen Hydraulikquelle 27 und den Ventileinrichtungen 28 im Hydraulikkreis angeordnet ist und die Hydraulikpumpe P und den Tank T der Hydraulikquelle 27 im Bedarfsfall zum Schutz der Komponenten kurzschließt. Mittels Ansteuerung der Ventilbaugruppe 26 bzw. der Wegeventile 29, 30 durch die Steuereinrichtung 31 kann somit über die beiden Hydraulikzylinder 23, 24 eine Soll-Spaltbreite der Konditioniereinrichtung 6 eingestellt werden. Die Soll-Spaltbreite ist dabei beispielsweise über ein - in den FIGs. nicht dargestelltes - Fahrerassistenzsystem durch einen Bediener oder automatisiert vorgebbar.

Für die Ansteuerung der Ventileinrichtungen 28 zwecks unabhängiger Beaufschlagung der Hydraulikzylinder 23, 24 mittels der Steuereinrichtung 31 umfasst die Verstellvorrichtung 22 weiterhin eine Erfassungseinrichtung 33, die in FIG. 4 dargestellt ist. Die Erfassungseinrichtung 33 ist dazu vorgesehen und eingerichtet, die Ist-Spaltbreiten der Konditioniereinrichtung 6 zu bestimmen. Hierzu umfasst die Erfassungseinrichtung 33 Wegmessvorrichtungen 34, genauer gesagt eine erste Wegmessvorrichtung und eine zweite Wegmessvorrichtung. Wie auch die beiden Hydraulikzylinder 23, 24 sind die beiden Wegmessvorrichtungen 34 mit der zur Einstellung der Spaltbreite der Konditioniereinrichtung 6 beweglich gelagerten Walze 8, 9, hier der zweiten Walze 9, auf in Richtung der Längsachse 11, 12 der Walze 8, 9, hier der Längsachse 12 der zweiten Walze 9, gegenüberliegenden Seiten gekoppelt. Insbesondere sind die beiden Wegmessvorrichtungen 34 zwischen dem ortsfest angeordneten Drehlager 19 und dem verschiebbaren Drehlager 20 auf jeder Seite S1, S2 angeordnet und jeweils mit diesen Komponenten direkt oder indirekt gekoppelt.

Jede der beiden Wegmessvorrichtungen 34 umfasst dabei ein Drehpotentiometer 35 und ein Koppelgestänge 36. Das Koppelgestänge 36 ist dabei einerseits mit der zur Einstellung der Spaltbreite beweglich gelagerten Walze 8, 9, hier der zweiten Walze 9, und andererseits mit dem Drehpotentiometer 35 verbunden. Das Koppelgestänge 36 ist dabei mit dem verschiebbaren Drehlager 20 bzw. dem beweglichen Teil der Linearführung 21 verbunden. Bei einer Veränderung des Abstands zwischen den Walzen 8, 9 wird über das Koppelgestänge 36 somit eine Drehbewegung auf das Drehpotentiometer 35 übertragen, wodurch eine Ist-Spaltbreite der Konditioniereinrichtung 6 auf jeder der gegenüberliegenden Seiten S1, S2 bestimmt werden kann.

Die so ausgebildeten Wegmessvorrichtungen 34 bilden somit ein Absolutwegmesssystem aus.

Die Steuereinrichtung 31 ist dazu vorgesehen und eingerichtet, die mittels der Erfassungseinrichtung 33 bestimmten Ist-Spaltbreiten zu empfangen, die empfangenen Ist-Spaltbreiten mit einer vorgegebenen Soll-Spaltbreite zu vergleichen und abhängig von dem Vergleich die Ventilbaugruppe bzw. die Wegeventile 29, 30 anzusteuern und/oder zu regeln. Durch die unabhängige Ausführung der Ventileinrichtungen 28 und Hydraulikzylinder 23, 24 kann die beweglich gelagerte Walze 8, 9, hier die zweite Walze 9, auf jeder der gegenüberliegenden Seiten S1, S2 unabhängig auf eine für eine gleichmäßige Soll-Spaltbreite erforderliche Absolutposition bewegt werden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Selbstfahrender Feldhäcksler | 21 | Linearführung |
| 2 | Erntegut | 22 | Verstellvorrichtung |
| 3 | Erntegutkanal | 23 | Erster Hydraulikzylinder |
| 4 | Überladeeinrichtung | 24 | Zweiter Hydraulikzylinder |
| 5 | Häckselaggregat | 25 | Federelement |
| 6 | Konditioniereinrichtung | 26 | Ventilbaugruppe |
| 7 | Auswurfbeschleuniger | 27 | Hydraulikquelle |
| 8 | Erste Walze | 28 | Ventileinrichtung |
| 9 | Zweite Walze | 29 | Wegeventil |
| 10 | Gehäuse | 30 | Wegeventil |
| 10.1 | Erster Gehäuseabschnitt | 31 | Steuereinrichtung |
| 10.2 | Zweiter Gehäuseabschnitt | 32 | Druckbegrenzungsventil |
| 11 | Längsachse erste Walze | 33 | Erfassungseinrichtung |
| 12 | Längsachse zweite Walze | 34 | Wegmessvorrichtung |
| 13 | Riemenrolle erste Walze | 35 | Drehpotentiometer |
| 14 | Riemenrolle zweite Walze | 36 | Koppelgestänge |
| 15 | Welle erste Walze | | |
| 16 | Welle zweite Walze | S | Spalt |
| 17 | Achse | S1 | Erste Seite |
| 18 | Handgriff | S2 | Zweite Seite |
| 19 | Drehlager erste Walze | P | Hydraulikpumpe |
| 20 | Drehlager zweite Walze | T | Tank |

## Patentansprüche

1. Selbstfahrender Feldhäcksler (1) mit einer in dessen Erntegutkanal (3) angeordneten Konditioniereinrichtung (6), wobei die Konditioniereinrichtung (6) eine erste Walze (8) und eine zweite Walze (9) umfasst, welche jeweils um deren Längsachse (11, 12) drehbar gelagert sind, wobei eine Walze der beiden Walzen (8, 9) derart beweglich gelagert ist, dass sich der Abstand zwischen den Walzen (8, 9) zur Einstellung einer Spaltbreite der Konditioniereinrichtung (6) verändern lässt, wobei die Konditioniereinrichtung (6) eine Verstellvorrichtung (22) zur Einstellung der Spaltbreite umfasst, wobei die Verstellvorrichtung (22) einen ersten Hydraulikzylinder (23) und einen zweiten Hydraulikzylinder (24) umfasst, welche mit der zur Einstellung der Spaltbreite beweglich gelagerten Walze (8, 9) an in Richtung der Längsachse (11, 12) der Walze (8, 9) gegenüberliegenden Seiten (S1, S2) gekoppelt sind,
**dadurch gekennzeichnet, dass**
die Verstellvorrichtung (22) eine ansteuerbare Ventilbaugruppe (26) umfasst, welche dazu vorgesehen und eingerichtet ist, die beiden Hydraulikzylinder (23, 24) unabhängig voneinander mit von einer Hydraulikquelle (27) bereitgestelltem Hydraulikmedium zu beaufschlagen.

2. Selbstfahrender Feldhäcksler (1) nach Anspruch 1, **dadurch gekennzeichnet, dass** die Hydraulikquelle (27) Teil einer Arbeitshydraulik des selbstfahrenden Feldhäckslers (1) ist.

3. Selbstfahrender Feldhäcksler (1) nach Anspruch 1 oder 2, **dadurch gekennzeichnet, dass** die Ventilbaugruppe (26) zwei Ventileinrichtungen (28) umfasst, wobei jeweils eine Ventileinrichtung (28) jeweils einen der beiden Hydraulikzylinder (23, 24) mit der Hydraulikquelle (27) hydraulisch verbindet.

4. Selbstfahrender Feldhäcksler (1) nach Anspruch 3, **dadurch gekennzeichnet, dass** jede der beiden Ventileinrichtungen (28) zwei in Reihe geschaltete, vorzugsweise elektrisch ansteuerbare, Wegeventile (29, 30) mit jeweils zwei Schaltstellungen, eine Schaltstellung zum Zuführen von Hydraulikmedium in den jeweiligen Hydraulikzylinder (23, 24) und eine Schaltstellung zum Ablassen von Hydraulikmedium aus dem jeweiligen Hydraulikzylinder (23, 24), umfasst, wobei, vorzugsweise, die beiden Hydraulikzylinder (23, 24) jeweils als einfachwirkende Zylinder ausgestaltet sind.

5. Selbstfahrender Feldhäcksler (1) nach Anspruch 4, **dadurch gekennzeichnet, dass** ein Wegeventil der beiden Wegeventile (29, 30) in der Schaltstellung zum Zuführen von Hydraulikmedium in den jeweiligen Hydraulikzylinder (23, 24) eine Rückflusssicherung umfasst.

6. Selbstfahrender Feldhäcksler (1) nach einem der Ansprüche 3 bis 5, **dadurch gekennzeichnet, dass** die Ventilbaugruppe (26) ein den beiden Ventileinrichtungen (28) vorgeschaltetes, einstellbares Druckbegrenzungsventil (32) umfasst.

7. Selbstfahrender Feldhäcksler (1) nach einem der Ansprüche 1 bis 6, **dadurch gekennzeichnet, dass** die Konditioniereinrichtung (6) ein Gehäuse (10) mit einem ersten Gehäuseabschnitt (10.1) und einem zweiten Gehäuseabschnitt (10.2) umfasst, wobei die Walzen (8, 9) jeweils mittels einer zwischen den Gehäuseabschnitten (10.1, 10.2) verlaufenden Welle (15, 16) an dem ersten Gehäuseabschnitt (10.1) gelagert sind, wobei zur Lagerung der zur Einstellung der Spaltbreite beweglich gelagerten Walze (8, 9) Drehlager (19, 20) dienen, welche mittels einer Linearführung (21) an dem ersten Gehäuseabschnitt (10.1) verschiebbar gelagert sind.

8. Selbstfahrender Feldhäcksler (1) nach Anspruch 7, **dadurch gekennzeichnet, dass** die beiden Hydraulikzylinder (23, 24) jeweils mit der Linearführung (21) gekoppelt und dazu vorgesehen und eingerichtet sind, die zur Verstellung der Spaltbreite beweglich gelagerte Walze (8, 9) gegen Vorspannung eines Federelements (25) zur Einstellung der Spaltbreite zu bewegen.

9. Selbstfahrender Feldhäcksler (1) nach Anspruch 7 oder 8, **dadurch gekennzeichnet, dass** die Ventilbaugruppe (26) am zweiten Gehäuseabschnitt (10.2) angeordnet ist.

10. Selbstfahrender Feldhäcksler (1) nach einem der Ansprüche 1 bis 9, **dadurch gekennzeichnet, dass** die Verstellvorrichtung (22) eine Erfassungseinrichtung (33) zur Bestimmung von Ist-Spaltbreiten der Konditioniereinrichtung (6) mit einer ersten Wegmessvorrichtung (34) und einer zweiten Wegmessvorrichtung (34) umfasst, wobei die beiden Wegmessvorrichtungen (34) mit der zur Einstellung der Spaltbreite beweglich gelagerten Walze (8, 9) auf in Richtung der Längsachse (11, 12) der Walze (8, 9) gegenüberliegenden Seiten (S1, S2) gekoppelt sind.

11. Selbstfahrender Feldhäcksler (1) nach Anspruch 10, **dadurch gekennzeichnet, dass** jede der beiden Wegmessvorrichtungen (34) ein Drehpotentiometer (35) und ein Koppelgestänge (36) umfasst, wobei das Koppelgestänge (36) einerseits mit der zur Einstellung der Spaltbreite beweglich gelagerten Walze (8, 9), insbesondere der Linearführung (21), und andererseits mit dem Drehpotentiometer (35) verbunden ist.

12. Selbstfahrender Feldhäcksler (1) nach einem der Ansprüche 1 bis 11,
**dadurch gekennzeichnet, dass** der selbstfahrende Feldhäcksler (1) eine Steuereinrichtung (31) zur Steuerung und/oder Regelung der Ventilbaugruppe (26) umfasst, wobei die Steuereinrichtung (31) dazu vorgesehen und eingerichtet ist, die Ventilbaugruppe (26) derart anzusteuern und/oder zu regeln, dass mittels der beiden Hydraulikzylinder (23, 24) eine vorgebbare Soll-Spaltbreite der Konditioniereinrichtung (6) eingestellt wird.

13. Selbstfahrender Feldhäcksler (1) nach Anspruch 11 und 12, **dadurch gekennzeichnet, dass** die Steuereinrichtung (31) dazu vorgesehen und eingerichtet ist, die mittels der Erfassungseinrichtung (33) bestimmten Ist-Spaltbreiten zu empfangen, die empfangenen Ist-Spaltbreiten mit einer vorgegebenen Soll-Spaltbreite zu vergleichen und abhängig von dem Vergleich die Ventilbaugruppe (26) anzusteuern und/oder zu regeln.
